**Europäisches Patentamt**

**European Patent Office**

**Office européen des brevets**

(19)

(11) Veröffentlichungsnummer: **0 167 675**
**B1**

# EUROPÄISCHE PATENTSCHRIFT

(12)

(45) Veröffentlichungstag der Patentschrift:
**16.03.88**

(21) Anmeldenummer: **84116266.2**

(22) Anmeldetag: **22.12.84**

(51) Int. Cl.⁴: **F 16 K  27/00,** F 16 L  39/00,
F 16 L  25/00

(54)  **Vorrichtung zum Verbinden mehrerer Bauteile.**

(30)  Priorität: **16.03.84  DE 3409698**

(43)  Veröffentlichungstag der Anmeldung:
**15.01.86 Patentblatt 86/3**

(45)  Bekanntmachung des Hinweises auf die Patenterteilung:
**16.03.88 Patentblatt 88/11**

(84)  Benannte Vertragsstaaten:
**CH DE FR GB IT LI**

(56)  Entgegenhaltungen:
**FR-A-1 462 820**
**FR-A-2 122 225**
**US-A-4 082 324**

(73)  Patentinhaber: **ROBERT BOSCH GMBH, Postfach
50, D-7000 Stuttgart 1 (DE)**

(72)  Erfinder: **Frötschl, Erwin, Kirchstrasse 22, D-7014
Kornwestheim (DE)**

LIBER, STOCKHOLM 1988

EP 0 167 675 B1

## Beschreibung

### Stand der Technik

Die Erfindung geht aus von einer Vorrichtung nach der Gattung des Hauptanspruchs. Eine derartige aus dem vorveröffentlichten Prospekt B 775729098 der Firma Joucomatik (Wegeventil der Baureihe 264) bekannte Vorrichtung besteht aus mehreren Bauteilen, die durch einen Verbindungsnippel zusammengehalten sind. Dieser Nippel ist in einer die Bauteile durchdringenden Bohrung angeordnet und wird dort von je einer Schraube festgehalten, die in eine nahe am Ende des Nippels ausgebildete Ringnut eingreift. Dies hat den Nachteil, daß der Abstand der beiden Ringnuten exakt auf den Abstand der die Nippel aufnehmenden Bohrungen abgestimmt sein muß.

### Vorteile der Erfindung

Die erfindungsgemäß, Vorrichtung mit den kennzeichnenden Merkmalen des Hauptanspruchs hat demgegenüber den Vorteil, daß die Fertigungstoleranzen relativ groß sein können, da am Verbindungselement ein reichliches Einbauspiel besteht. Die Vorrichtung baut kompakt und einfach und eignet sich für besondere Anwendungsfälle.

Durch die in den Unteransprüchen aufgeführten Maßnahmen sind vorteilhafte Weiterbildungen und Verbesserungen der im Hauptanspruch angegebenen Merkmale möglich.

### Zeichnung

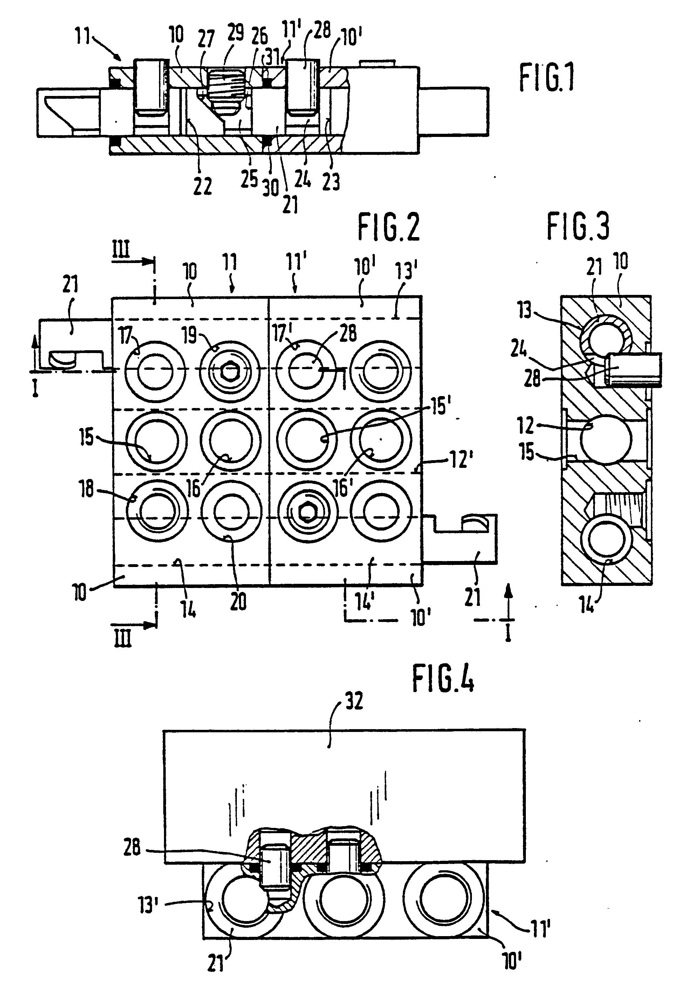

Ein Ausführungsbeispiel der Erfindung ist in der Zeichnung dargestellt und in der nachfolgenden Beschreibung näher erläutert. Es zeigen Figur 1 einen Schnitt in Richtung I-I nach Figur 2, Figur 2 eine Draufsicht auf eine Ventilanschlußplatte, Figur 3 einen Schnitt in Richtung III-III nach Figur 2 und Figur 4 eine Anordnung eines Ventilkörpers auf einer Ventilanschlußplatte.

### Beschreibung des Ausführungsbeispiels

Im Gehäuse 10 einer Ventilanschlußplatte 11 für Pneumatikventile sind drei parallel verlaufende Bohrungen 12, 13, 14 ausgebildet, von denen die mittlere Bohrung 12 als Zuluftkanal und die beiden anderen Bohrungen 13, 14 als Entlüftungskanäle dienen. Quer zum Zuluftkanal 12 und diesen mittig schneidend sind zwei Zuluftanschlüsse 15, 16 angeordnet. Die Entlüftungsanschlüsse 17 bis 20 schneiden außermittig die Entlüftungskanäle 13, 14 und sind jeweils zum Zuluftkanal 12 hin versetzt. Der Zuluftanschluß 15 und die Entlüftungsanschlüsse 17, 18 sind in einer ersten, quer zum Zuluftkanal 12 verlaufenden Ebene angeordnet, der Zuluftanschluß 16 und die Entlüftungsanschlüsse 19, 20 in einer zweiten, parallel zur ersten verlaufenden Ebene.

Die Teile einer zweiten, identischen Ventilanschlußplatte 11' sind jeweils mit (') bezeichnet. In den fluchtenden Entlüftungskanälen 13, 13' befindet sich eine Buchse 21. Diese hat nahe den beiden Enden 22, 23 je eine außermittige, quer zur Buchsenachseverlaufende Ausfräsung 24, 25, die die Wandung der Buchse 21 an dieser Stelle vollständig durchschneidet. Die Ausfräsung 24 ist zylindrisch, die Ausfräsung 25 hat an ihrer der Ausfräsung 24 zugewandten Seite eine senkrechte Kante 26 und auf der anderen Seite eine schräge Kante 27. In die Ausfräsung 24 ist ein Leichtspannstift 28 eingepreßt, der im Entlüftungsanschluß 17' geführt ist und über die zweite Ventilanschlußplatte 1 hinausragt. In die Ausfräsung 25 greift eine in den Entlüftungsanschluß 19 eingeschraubte, angeschrägte Hohlschraube 29 ein.

Zum Aufbau einer Ventilbatterie sind jeweils mehrere gleiche Ventilanschlußplätten 11, 11' aneinandergereiht. Die Übergangsstellen zwischen zwei Ventilanschlußplatten 11, 11' sind durch in dafür vorgesehene Ausnehmungen 30 eingelegte Dichtringe 31 abgedichtet. Auf den Ventilanschlußplatten 11, 11' sind Ventilgehäuse 32 angeordnet.

Bei der Montage wird die Buchse 21 vollständig in die Entlüftungskanäle 13, 13' eingeschoben, bis sich die Ausfräsung 24 mit dem Entlüftungsanschluß 17' deckt, dann wird sie mit Hilfe des Leichtspannstifts 28 befestigt. Der Leichtspannstift 28 ragt über die Ventilanschlußplatte 11' hinaus und dient somit gleichzeitig - wie in Figur 4 dargestellt - zum Fixieren des Ventilgehäuses 32 auf der Ventilanschlußplatte 11'. Dadurch wird auch ein Verdrehen des Ventilgehäuses 32 auf der Ventilanschlußplatte 11' verhindert.

Das andere Ende 22 der Buchse 2J ist in den Anschluß, kanal 13 der Ventilanschlußplatte 11 soweit eingeschoben, bis sich die Ausfräsung 25 und der Entlüftungsanschluß 19 decken. Der Abstand der beiden Ausfräsungen 24, 25 entspricht weitgehend dem Abstand der Entlüftungsanschlüsse 17', 19 zweier aneinandergereihter Ventilanschlußplatten 11, 11'. Die Hohlschraube 29 drückt und gleitet beim Festschrauben an der schrägen Kante 27 der Ausfräsung 25 entlang und zieht dadurch die beiden Ventilanschlußplatten 11, 11' geringfügig aneinander. Dadurch können Toleranzunterschiede ausgeglichen und die Ventilanschlußplatten 11, 11' dicht verbunden werden.

Besonders vorteilhaft erweist es sich, wenn eine zweite, in den Entlüftungskanälen 14, 14' angeordnete Buchse 21 in entgegengesetzter Richtung wie die Buchse 21 in den Entlüftungskanälen 13, 13' eingesetzt ist. Dadurch werden die Anschlußplatten 11, 11' über Kreuz angezogen und besonders dicht verbunden.

Selbstverständnich ist die Buchse 21 nicht nur zur Verbindung von Ventilanschlußplatten verwendbar, sondern auch für beliebige Gehäuse- oder Bauteile geeignet. Auch ist es nicht unbedingt notwendig, die Buchse 21 in einem Entlüftungskanal anzuordnen.

**Patentansprüche**

1. Vorrichtung zum Verbinden mehrerer Bauteile (10, 10') mit einem Verbindungselement (21), das in eine die Bauteile (10, 10') durchdringende Längsbohrung (13, 14) eingesteckt ist und durch mehrere in etwa senkrecht zur Längsbohrung (13, 14) verlaufenden und diese schneidenden Querbohrungen (17 bis 20) eingebrachte Befestigungselemente (28, 29) festgehalten ist, von denen sich mindestens je eines in einem Bauteil (10, 10') befindet und in eine Ausnehmung (24, 25) am Verbindungselement (21) eindringt, dadurch gekennzeichnet, daß an den in das erste Bauteil (10) ragenden Ausnehmungen (25) das Verbindungselementes (21) mindestens auf der dem zweiten Bauteil (10') abgewandten Seite der Ausnehmungen (25) eine Schrägfläche (27) ausgebildet ist, an der die Befestigungselemente (29) gleiten, wodurch das erste Bauteil (10) in Richtung der Längsachse des Verbindungselementes (21) bis zum Anschlag an das zweite Bauteil (10') bewegt wird, und daß in die in das zweite Bauteil (10') ragenden Ausnehmungen (24) des Verbindungselementes (21) Befestigungselemente (28) spielfrei eingesetzt sind.

2. Vorrichtung nach Anspruch 1, dadurch gekennzeichnet, daß die Ausnehmungen (24, 25) jeweils nahe den beiden Enden des Verbindungselementes (21) ausgebildet sind.

3. Vorrichtung nach Anspruch 1 und/oder 2, dadurch gekennzeichnet, daß das Verbindungselement (21) als Hohlkörper ausgebildet ist.

4. Vorrichtung nach einem der Ansprüche 1 bis 3, dadurch gekennzeichnet, daß die Ausnehmungen (24, 25) außermittig im Verbindungselement (21) ausgebildet sind.

5. Vorrichtung nach einem der Ansprüche 1 bis 4, dadurch gekennzeichnet, daß die in das zweite Bauteil (10') ragende Ausnehmung (24) des Verbindungselementes (21) zylinderförmig ausgebildet ist.

6. Vorrichtung nach einem der Ansprüche 1 bis 5, dadurch gekennzeichnet, daß die Verbindungselemente (21) in Entlüftungskanälen (13, 14) einer Ventileinrichtung (11) angeordnet sind.

7. Vorrichtung nach Anspruch 6, dadurch gekennzeichnet, daß die Entlüftungskanäle (13, 14) der Ventileinrichtungen (11) außermittig angeordnet sind.

8. Vorrichtung nach einem der Ansprüche 1 bis 7, dadurch gekennzeichnet, daß die Bauteile (10, 10') jeweils mit Hilfe zweier Verbindungselemente (21) verbunden sind und daß diese Verbindungselemente (21) in entgegengesetzter Richtung angeordnet sind.

9. Vorrichtung nach einem der Ansprüche 1 bis 8, dadurch gekennzeichnet, daß in die zylinderförmige Ausnehmung (24) ein Spannstift (28) und in die andere Ausnehmung (25) eine angeschrägte Schraube (29) eingreift.

10. Vorrichtung nach Anspruch 9, dadurch gekennzeichnet, daß der Spannstift (28) über die Ventileinrichtung (11) hinausragt und zum Fixieren eines Ventilgehäuses (32) dient.

**Claims**

1. Apparatus for the connection of several components (10, 10') by a connecting element (21), which is inserted in a longitudinal bore hole (13, 14) penetrating the components (10, 10') and secured by several fastening elements (28, 29), introduced into transverse bore holes (17 to 20) running approximately perpendicular to the longitudinal bore hole (13, 14) and intersecting the latter, of which fastening elements at least one is located in each case in a component (10, 10') and enters a recess (24, 25) on the connecting element (21), characterized in that there is a sloping area (27) on the recesses (25), protruding into the first component (10), of the connecting element (21), at least on the side of the recesses (25) remote from the second component (10'), against which sloping area the fastening elements (29) slide, whereby the first component (10) is moved in the direction of the longitudinal axis of the connecting element (21) up to the second component (10') as far as the stop, and in that fastening elements (28) are inserted free from play in the recesses (24) of the connecting element (21) protruding into the second component (10').

2. Apparatus according to Claim 1, characterized in that the recesses (24, 25) are in each case made close to the two ends of the connecting element (21).

3. Apparatus according to Claim 1 and/or 2, characterized in that the connecting element (21) is designed as a hollow body.

4. Apparatus according to one of Claims 1 to 3, characterized in that the recesses (24, 25) are designed off-centre in the connecting element (21).

5. Apparatus according to one of Claims 1 to 4, characterized in that the recess (24), protruding into the second component (10'), of the connecting element (21) is of cylindrical design.

6. Apparatus according to one of Claims 1 to 5, characterized in that the connecting elements (21) are arranged in vent passages (13, 14) of a valve device (11).

7. Apparatus according to Claim 6, characterized in that the vent passages (13, 14) of the valve devices (11) are arranged off-centre.

8. Apparatus according to one of Claims 1 to 7, characterized in that the components (10, 10') are in each case connected with the aid of two connecting elements (21), and in that these connecting elements (21) are arranged in opposite directions.

9. Apparatus according to one of Claims 1 to 8, characterized in that a clamping pin (28) engages in the cylindrical recess (24) and a bevelled screw (29) engages in the other recess (25).

10. Apparatus according to Claim 9, characterized in that the clamping pin (28) projects beyond the valve device (11) and serves for fixing a valve housing (32).

**Revendications**

1. Dispositif pour assembler plusieurs pièces (10, 10') avec un élément d'essemblage (21), qui est introduit dans un perçage longitudinal (13, 14) traversant les pièces (10, 10') et qui est maintenu par plusieurs éléments de fixation (28, 29) introduits dans des perçages tranversaux (17 à 20) s'étendant à peu près perpendiculairement au perçage longitudinal (13, 14) at coupant celui-ci, l'un au moins de ces éléments de fixation se trouvant dans une pièce (10, 10') et pénétrant dans un évidement (24, 25) sur l'élément d'assemblage (21), dispositif caractérisé en ce que sur les évidements (25), s'étendant dans la première pièce (10), de l'élément d'assemblage (21), est ménagée, au moins sur le côté opposé à la seconde pièce (10') des évidements (25), une surface oblique (27) sur laquelle glissent les éléments de fixation (29), grâce à quoi la première pièce (10) est déplacée en direction de l'axe longitudinal de l'élément d'assemblage (21) jusqu'à venir en butée contre la deuxième pièce (10'), tandis que dans les évidements (24), s'étendant dans la deuxième pièce (10'), de l'élément d'assemblage (21), sont insérés, sans jeu, des éléments de fixation (28).

2. Dispositif selon la revendication 1, caractérisé en ce que les évidements (24, 25) sont respectivement ménagés au voisinage des deux extrémités de l'élément d'assemblage (21).

3. Dispositif selon la revendication 1 ou 2, caractérisé en ce que l'élément d'assemblage (21) revêt la forme d'une structure creuse.

4. Dispositif selon une des revendications 1 à 3, caractérisé en ce que les évidements (24, 25) sont ménagés excentriquement dans l'élément d'assemblage (21).

5. Dispositif selon une des revendications 1 à 4, caractérisé en ce que, l'évidement (24), s'étendant dans la deuxième pièce (10'), de l'élément d'assemblage (21), est de forme cylindrique.

6. Dispositif selon une des revendications 1 à 5, caractérisé en ca que les éléments d'assemblage (21) sont disposés dans les canaux d'évacuation d'air (13, 14) d'un dispositif de soupape 11.

7. Dispositif selon la revendication 6, caractérisé en ce que les canaux d'évacuation d'air (13, 14) des dispositifs de soupape (11) sont disposés excentriquement.

8. Dispositif selon une des revendications 1 à 7, caractérisé en ce que les pièces (10, 10') sont respectivement assemblées à l'aide de deux éléments d'assemblage et que ces éléments d'assemblage (21) sont disposés en sens opposés.

9. Dispositif selon une des revendications 1 à 8, caractérisé en ce que dans l'évidement (24) de forme cylindrique, vient en prise une goupille élastique (28) tandis que dans l'autre évidement (25) vient en prise une vis biseautée (29).

10. Dispositif selon la revendication 9, caractérisé en ce que la goupille élastique (28) fait saillie au-dessus du dispositif de vanne (11) et sert à la fixation d'un boîtier de soupape (32).

FIG.1

FIG.2

FIG.3

FIG.4